# EUROPEAN PATENT SPECIFICATION

(11) **EP 3 904 640 B1**
(45) Date of publication and mention of the grant of the patent: **28.02.2024**
(21) Application number: 18942034.2
(22) Date of filing: 06.12.2018
(51) Int. Cl.: F01D 17/10, G21D 3/04, G21D 3/00

(54) **SAFETY-LEVEL FUNCTIONAL CONTROL SYSTEM AND METHOD FOR STEAM ATMOSPHERIC EMISSIONS SYSTEM OF NUCLEAR POWER PLANT**
FUNKTIONSKONTROLLSYSTEM AUF SICHERHEITSEBENE UND VERFAHREN FÜR EIN ATMOSPHÄRISCHES DAMPFEMISSIONSSYSTEM EINES KERNKRAFTWERKS
SYSTÈME ET PROCÉDÉ DE COMMANDE DE FONCTION DU NIVEAU DE SÉCURITÉ POUR SYSTÈME D'ÉMISSIONS DE VAPEUR DANS L'ATMOSPHÈRE DE CENTRALE NUCLÉAIRE

(30) Priority: 05.12.2018 CN 201811478785
(43) Date of publication of application: 03.11.2021
(73) Proprietor: China Nuclear Power Design Company Ltd. (Shenzhen), Shenzhen, Guangdong 518100 (CN); China Nuclear Power Engineering Company Ltd., Shenzen, Gaungdong 518000 (CN); China General Nuclear Power Group, Futian District Shenzhen Guangdong 518000 (CN); CGN Power Co., Ltd., Futian District Shenzhen Guangdong 518000 (CN)
(72) Inventor: ZHOU, Yexiang, Shenzhen, Guangdong 518100 (CN); REN, Liyong, Shenzhen, Guangdong 518100 (CN); LIANG, Ling, Shenzhen, Guangdong 518100 (CN); WANG, Qiaoyan, Shenzhen, Guangdong 518100 (CN); YANG, Zhen, Shenzhen, Guangdong 518100 (CN); PENG, Huaqing, Shenzhen, Guangdong 518100 (CN); DENG, Tian, Shenzhen, Guangdong 518100 (CN); LIU, Guangming, Shenzhen, Guangdong 518100 (CN); TIAN, Yajie, Shenzhen, Guangdong 518100 (CN); ZHANG, Xuegang, Shenzhen, Guangdong 518100 (CN); JIANG, Hui, Shenzhen, Guangdong 518100 (CN); WANG, Wei, Shenzhen, Guangdong 518100 (CN)
(74) Representative: Greaves Brewster LLP
(86) International application number: PCT/CN2018/119498
(87) International publication number: WO 2020/113505

(56) References cited:
- CN-A- 105 298 556
- CN-U- 202 855 323
- CN-U- 203 366 759
- CN-U- 203 858 871
- JP-A- H09 178 107
- US-A1- 2011 158 371

## Description

### FIELD OF THE INVENTION

The present invention belongs to the technical field of safety control of steam atmospheric emission system and, more particularly, relates to a safety-level functional control system and method for a steam atmospheric emission system of a nuclear power plant.

### BACKGROUND OF THE INVENTION

The steam atmospheric emission system is a safety system that discharges the steam generated by the steam generator in the primary circuit of a nuclear power plant into the atmosphere, so as to discharge the heat of the reactor. The steam atmospheric emission system is closely related to the safe operation of the nuclear power plant, and the safety-level functional control of the steam atmospheric emission system is of great importance.

A conventional steam atmospheric emission system is generally equipped with three emission loops, each emission loop being connected to a steam generator in the primary circuit, wherein each emission loop is equipped with a safety-level self-excited isolation valve and a safety-level electric regulating valve in series, to realize the safety function of the steam atmospheric emission system. Existing safety-level control systems for steam atmospheric emission systems, such as for an EPR reactor, adopts four independent control columns. Each control column can simultaneously process the control function of the main steam relief isolation valve ("MSRIV") and main steam relief control valve ("MSRCV"), and the control functions of the MSRCV are distributed to and achieved in two digital control systems ("DCS") platforms.

However, the design structure of the above-mentioned safety-level control system for steam atmospheric emission system is complicated, and it is difficult to meet the design requirements for the updating of nuclear power plants.

### SUMMARY OF THE INVENTION

In order to solve the technical problems in the prior art, a safety-level functional control system and method for a steam atmospheric emission system of a nuclear power plant according to the appended claims are provided.

According to one embodiment of the present invention, a safety-level functional control system for a steam atmospheric emission system of a nuclear power plant is provided. The steam atmospheric emission system includes three independent emission loops, each emission loop is connected to a corresponding steam generator in a primary circuit of the nuclear power plant, and each emission loop includes a main steam relief isolation valve (MSRIV) and a main steam relief control valve (MSRCV) connected in series;
the safety-level function control system includes three independent control columns being connected to the steam atmospheric emission system, each independent control column includes a first control sub-column for controlling MSRIV and a second control sub-column for controlling MSRCV;
each MSRIV is respectively connected to the first control sub-column of the three independent control columns, and is configured to execute corresponding control operations when first control signal sent by at least two first control sub-columns is received;
each MSRCV is connected to a second control sub-column in one independent control column, and different MSRCVs are connected to different second control sub-columns, and is configured to execute safety function of the steam atmospheric emission system when a second control signal independently sent by a corresponding second control sub-column is received.

According to one aspect of the present invention, each MSRIV includes two sets of pilot valve series connected in parallel, and each set of pilot valve series includes two pilot valves connected in series,
each pilot valve in MSRIV is connected to a first control sub-column, and the two pilot valves in each pilot valve series are connected to two different first control sub-column respectively;
the first control sub-columns connected to the same set of pilot valves of each MSRIV are different, and the same set of pilot valves are two pilot valves connected to the same first control sub-column in the two sets of pilot valve series in MSRIV

According to one aspect of the present invention, the first control sub-column connected to the same set of pilot valves of each MSRIV is a pilot valve common control column corresponding to each MSRIV, and the pilot valve common control column connected to each MSRIV and the second control sub-column connected to MSRIV in the same emission loop are in a same independent control column.

According to one aspect of the present invention, the safety function of the steam atmospheric emission system is configured for: automatically adjusting opening degree of MSRCV according to a pressure value of a steam generator when MSRIV is turned on; and automatically adjusting opening degree of MSRCV, manual control function, isolation function of the steam atmospheric emission system according to a core power of the nuclear power plant when MSRIV is closed and there is no isolation function of the steam atmospheric emission system.

According to one aspect of the present invention, the second control sub-column includes:
a first control module, configured to control the corresponding MSRCV to automatically adjust an opening degree of MSRCV according to a pressure value of the steam generator by adopting PID algorithm when the MSRIV is turned on;
a second control module, configured to control the corresponding MSRCV to automatically adjust the opening degree of MSRCV according to a manually set steam generator pressure value by adopting PID algorithm when the MSRIV is turned on, or, to control the corresponding MSRCV to automatically adjust the opening degree of MSRCV according to a manually set opening degree;
a third control module, configured to control the corresponding MSRCV to automatically adjust the opening degree of the MSRCV according to the core power of the nuclear power plant via a polyline function algorithm when the MSRIV is closed and there is no isolation function of the steam atmospheric emission system; and
a logic drive circuit connected to the first control module, the second control module and the third control module respectively, and configured to control any one of the first control module, the second control module and the third control module to put into use according to a preset control logic.

According to one aspect of the present invention, the logic drive circuit includes: a first AND gate having an output end connected to the first control module, a second AND gate having an output end connected to the second control module, a third AND gate having an output end connected to the third control module, and a NOT gate;
a first logic control signal configured to call the first control module, connected to an input end of the first AND gate, and connected to an input end of the second AND gate and an input end of the third AND gate respectively through the NOT gate;
a second logic control signal configured to close the second control sub-column, connected to the input end of the first AND gate, the input end of the second AND gate, and the input end of the third AND gate respectively through the NOT gate;
a third logic control signal configured to indicate that the corresponding MSRIV has been turned on, connected to the input end of the first AND gate and the input end of the second AND gate respectively, and connected to the input end of the third AND gate through the NOT gate.

According to one aspect of the present invention, the logic drive circuit further includes: an OR gate, and a number of first logic control signals used to call the first control module are all connected to the input end of the OR gate, the output end of the OR gate is connected to the input end of the first AND gate, and the output end of the OR gate is connected to the input end of the second AND gate and the input end of the third AND gate through the NOT gate respectively.

According to another embodiment of the present invention, a safety-level functional control method for a steam atmospheric emission system of a nuclear power plant is provided, wherein the steam atmospheric emission system includes three independent emission loops, each emission loop is connected to a corresponding steam generator in a primary circuit of the nuclear power plant, and each emission loop includes a main steam relief isolation valve (MSRIV) and a main steam relief control valve (MSRCV) connected in series, characterized in that the method includes:
establishing three independent control columns connected to the steam atmospheric emission system, each independent control column including a first control sub-columnn for controlling MSRIV and a second sub-columnn for controlling MSRCV, each MSRIV being connected to first control sub-columns of the three independent control columns respectively, each MSRCV being connected to a second control sub-column of one independent control column, and different MSRCVs being connected to different second control sub-columns;
executing corresponding control operations through MSRIV when a first control signal sent by at least two first control sub-columns are received; and
executing corresponding safety function of the steam atmospheric emission system through the MSRCV when a second control signal independently sent by the second control sub-column is received.

According to one aspect of the present invention, each MSRIV includes two sets of pilot valve series connected in parallel, and each set of pilot valve series includes two pilot valves connected in series,
each pilot valve in MSRIV is connected to a first control sub-column, and the two pilot valves in each pilot valve series are connected to two different first control sub-column respectively;
the first control sub-columns connected to the same set of pilot valves of each MSRIV are different, and the same set of pilot valves are two pilot valves connected to the same first control sub-column in the two sets of pilot valve series in MSRIV

According to one aspect of the present invention, the first control sub-column connected to the same set of pilot valves of each MSRIV is a pilot valve common control column corresponding to each MSRIV, and the pilot valve common control column connected to each MSRIV and the second control sub-column connected to MSRIV in the same emission loop are in the same independent control column.

According to one aspect of the present invention, executing corresponding control operations through MSRIV when a first control signal sent by at least two first control sub-columns are received includes:
MSRIV being configured for executing the control operation corresponding to the first control signal when the same set of pilot valves in MSRIV receive the first control signal, and at
least one of the other pilot valves of MSRIV also receives the first control signal at the same time.

According to one aspect of the present invention, the safety function of the steam atmospheric emission system includes: automatically adjusting MSRCV opening degree according to a pressure value of a steam generator when MSRIV is turned on, and automatically adjusting MSRCV opening degree, manual control function, isolation function of the steam atmospheric emission system according to a core power of the nuclear power plant when MSRIV is closed and there is no isolation function of the steam atmospheric emission system.

According to one aspect of the present invention, the second control sub-column includes:
a first control module, configured to control the corresponding MSRCV to automatically adjust an opening degree of MSRCV according to a pressure value of the steam generator by adopting PID algorithm when the MSRIV is turned on;
a second control module, configured to control the corresponding MSRCV to automatically adjust the opening degree of MSRCV according to a manually set steam generator pressure value by adopting PID algorithm when the MSRIV is turned on, or, to control the corresponding MSRCV to automatically adjust the opening degree of the MSRCV according to a manually set opening degree;
a third control module, configured to control the corresponding MSRCV to automatically adjust the opening degree of the MSRCV according to the nuclear power plant core power via a polyline function algorithm when the MSRIV is closed and there is no isolation function of the steam atmospheric emission system; and
a logic drive circuit connected to the first control module, the second control module and the third control module respectively, and configured to control any one of the first control module, the second control module and the third control module to put into use according to a preset control logic.

According to one aspect of the present invention, the logic drive circuit includes: a first AND gate having an output end connected to the first control module, a second AND gate having an output end connected to the second control module, a third AND gate having an output end connected to the third control module, and a NOT gate;
a first logic control signal configured to call the first control module, connected to an input end of the first AND gate, and connected to an input end of the second AND gate and an input end of the third AND gate respectively through the NOT gate;
a second logic control signal configured to close the second control sub-column, connected to the input end of the first AND gate, the input end of the second AND gate, and the input end of the third AND gate respectively through the NOT gate; and
a third logic control signal configured to indicate that the corresponding MSRIV has been turned on, connected to the input end of the first AND gate and the input end of the second AND gate respectively, and connected to the input end of the third AND gate through the NOT gate.

According to one aspect of the present invention, the logic drive circuit further includes: an OR gate, and a number of first logic control signals used to call the first control module are all connected to the input end of the OR gate, the output end of the OR gate is connected to the input end of the first AND gate, and the output end of the OR gate is connected to the input end of the second AND gate and the input end of the third AND gate respectively through the NOT gate.

The present invention has the following advantages.

By designing the safety-level functional control system into three independent control columns connected to the steam atmospheric emission system, each independent control column includes: a first control sub-column for controlling MSRIV and a second control sub-column for controlling MSRCV Each MSRIV is connected to the first control sub-column of the three independent control sub-columns respectively, and is used to execute corresponding control operations when the same control signal sent by at least two first control sub-columns is received; each MSRCV is connected to the second control sub-column in an independent control column, and different MSRCVs are connected to different second control sub-columns, which are used to realize the safety function of the corresponding steam atmospheric emission system under the independent control of the corresponding second control sub-column. Compared with the existing control system, while meeting the triple redundant configuration of the steam atmospheric emission system, the safety-level functional control system of the present invention also meets the design principles of the three independent control columns, which simplifies the number of control columns of the control system, and reduces the complexity of the structure of the control system. The control function has a more centralized design, the failure of any independent control column will at most lead to the loss of an opening function of one emission loop in the steam atmospheric emission system, and an isolation function of the steam atmospheric emission system will remain unaffected and be highly reliable. When the safety function of only one independent control column in the safety-level function control system is triggered by mistake, and openging by mistake or wrong isolation function will not occur in any emission loop of the steam atmospheric emission system, and the safety level function control system has high reliability.

### BRIEF DESCRIPTION OF THE DRAWINGS

The safety-level functional control system and method for a steam atmospheric emission system of a nuclear power plant of the present invention will now be described in detail below with reference to the accompanying drawings, in which:
Fig. 1 is a schematic diagram of a safety-level function control system of a steam atmospheric emission system according to a first embodiment of the present invention;
Fig. 2 is a schematic logic control diagram for use in a control module in MSRCV according to the first embodiment of the present invention; and
Fig. 3 is a flowchart of a safety-level function control method of a steam atmospheric emission system according to a second embodiment of the present invention.

### DETAILED DESCRIPTION OF THE INVENTION

In order to make the objective, technical solutions and technical effects of the present invention clearer, the present invention will be further described in detail below in conjunction with the accompanying drawings and embodiments. It should be understood that the embodiments described herein are only for explaining the present invention, not for limiting the scope of the present invention.

### First embodiment

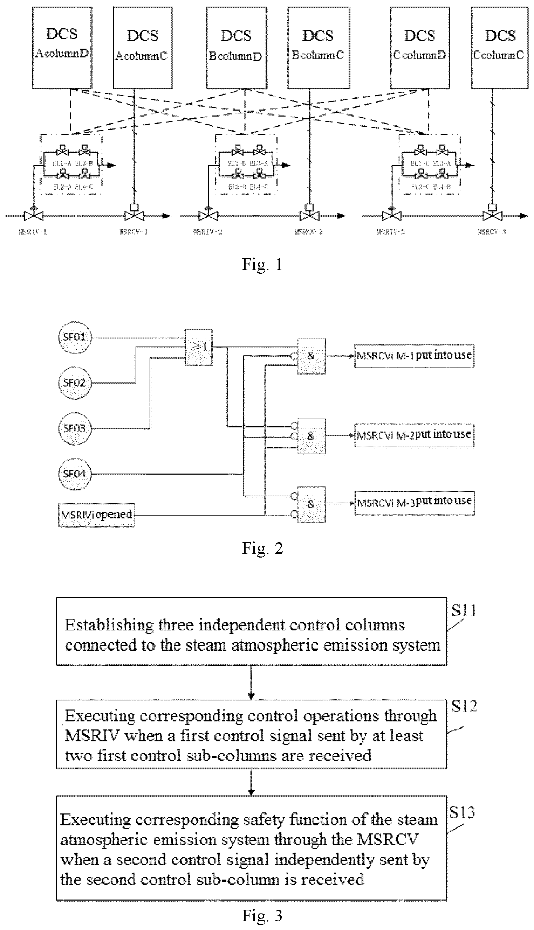

Fig. 1 shows an implementation process of a nuclear power plant leakage monitoring alarm method according to one embodiment of the present invention, including steps S 1 to S7. The execution body of the embodiment according to the present invention may be server device (such as computer) configured for performing nuclear power plant leakage monitoring and comprehensive diagnosis.

The first embodiment of the present invention provides a safety-level functional control system for a steam atmospheric emission system, which is suitable for controlling the safety-level function of the steam atmospheric emission system in the primary circuit of a nuclear power plant. Referring to Fig. 1, the steam atmospheric emission system includes emission loops meeting the triple redundant configuration (that is, there are three independent emission loops), each emission loop is connected to a corresponding steam generator in the primary circuite of the nuclear power plant, and each emission loop includes MSRIV (For example, MSRIV-1, MSRIV-2, MSRIV-3 in Fig. 1) and MSRCV (such as MSRCV-1, MSRCV-2, MSRCV-3 in Fig. 1) connected in series.

Referring to Fig. 1, the safety-level functional control system includes: three independent control columns connected to the steam atmospheric emission system, each independent control column includes: the first control sub-column configured to control MSRIV (for example, the DCS A column D, DCS B column D, DCS C column D in Fig. 1) and the second control sub-column configured to control MSRCV (for example, DCS A column C, DCS B column C, DCS C column C in Fig. 1).

Each MSRIV is respectively connected to the first control sub-column of the three independent control sub-columns, and is configured to execute a corresponding control operations (such as opening operation or closing operation) when the first control signal (such as the turn on signal or the turn off signal) sent by at least two first control sub-columns is received;

Each MSRCV is connected to a second control sub-column in an independent control column, and different MSRCVs are connected to different second control sub-columns (each MSRCV is connected to a second control sub-column in a one-to-one correspondence, each second control sub-column only controls one MSRCV), which is used to execute the corresponding safety function of the steam atmospheric emission system when the second control signal independently sent by the corresponding second control sub-column is received. The safety function of the steam atmospheric emission system may include: automatically adjusting MSRCV opening function according to a pressure value of a steam generator when MSRIV is turned on, and automatically adjusting MSRCV opening function, manual control function, isolation function of the steam atmospheric emission system according to a core power of the nuclear power plant when MSRIV is closed and there is no isolation function of the steam atmospheric emission system.

In the present embodiment, compared to the existing control system design, the safety-level functional control system of the steam atmospheric emission system meets the triple redundant configuration of the steam atmospheric emission system as well as the design principle of three independent control columns, which further simplifies the number of control columns of the control system, reduces the complexity of the control system structure, and makes the control function more centralized.

Specifically, in the emission loop designed for the triple-redundant configuration of the steam atmospheric emission system, each emission loop includes MSRIV and MSRCV in series. On the one hand, each MSRIV is connected to a first control sub-column of three independent control columns (for example, DCS A column D, DCS B column D, DCS C column D in Fig. 1) are connected for executing corresponding control operation when the same control signal sent by at least two first control sub-columns is received, so that MSRIV will not start or close by mistake due to any control column being triggered by mistake, thereby avoiding any emission loop in the steam atmospheric emission system from being operated by mistake and ensuring the operation reliability of the safety-level function control system. On the one hand, each MSRCV is connected to the second control sub-column in an independent control column (for example, DCS A column C, DCS B column C, and DCS C column C in Fig. 1), and different MSRCVs are connected to different second control sub- column s, which are used to realize the corresponding safety functions of the steam atmospheric emission system under the independent control of the corresponding second control sub-columns (the safety functions of the steam atmospheric emission system include: automatically adjusting MSRCV opening function according to a pressure value of a steam generator when MSRIV is turned on, and automatically adjusting MSRCV opening function, manual control function, isolation function of the steam atmospheric emission system according to a core power of the nuclear power plant when MSRIV is closed and there is no isolation function of the steam atmospheric emission system. MSRCV not only realizes the safety function of the steam atmospheric emission system, but also is designed in a safety-level function control system, which makes the design of the safety-level function control system for the steam atmospheric emission system more centralized and simplified.

It should be noted that, in actual applications, the safety functions of the steam atmospheric emission system mainly include the following functions:
1) overpressure protection function of the main steam generator (namely SF01):
   When MSRIV is turned on, MSRCV automatically adjusts its opening degree according to the pressure of the main steam generator, so that the pressure of the main steam generator is controlled within a certain range.
2) medium pressure rapid cooling function (namely SF02):
   When MSRIV is turned on, MSRCV automatically adjusts its opening degree according to the pressure of the main steam generator, so that the primary circuit can be rapidly cooled at a certain rate and maintained at a medium-pressure rapid cooling completion state.
3) the function of increasing the setting value (namely SF03):
   MSRIV is turned on; MSRCV is on standby, and MSRCV can automatically adjust its opening degree according to the pressure of the main steam generator.
4) isolation function of steam atmospheric emission system (namely SF04):
   MSRIV is closed; MSRCV is also closed (that is, the steam atmospheric emission system is isolated).
5) manual control function (namely SF05):
   MSRIV can be adjusted manually; MSRCV can also be adjusted manually.
6) Spare function of steam atmospheric emission system (SF06):
   MSRIV is closed and there is no steam atmospheric emission system isolation function.
MSRCV automatically adjusts its opening degree according to the power of the nuclear power plant core.

From the above description of the safety function of the steam atmospheric emission system, it can be known that the functions of SF01-SF03 can be attributed to the automatic adjustment of MSRCV opening degree according to the pressure value of the steam generator of the nuclear power station; SF04 belongs to the isolation function of the s steam atmospheric emission system; SF05 is a manual control function; SF06 belongs to the function of automatically adjusting the opening degree of MSRCV according to the power of nuclear power plant core when MSRIV is closed and there is no steam atmospheric emission system isolation function.

Specifically, referring to Fig. 1, each MSRIV may include: two sets of pilot valve series connected in parallel, and each set of pilot valve series includes: two pilot valves connected in series. For example, in Fig. 1, MSRIV-1 includes pilot valve EL1-A, pilot valve EL2-A, pilot valve EL3-B, pilot valve EL4-C. MSRIV-2 includes pilot valve EL1-B, pilot valve EL2-B, pilot valve EL3-A, pilot valve EL4 -C. MSRIV-3 includes pilot valve EL1-C, pilot valve EL2-C, pilot valve EL3-A, pilot valve EL4-B. The connection of these pilot valves is shown in Fig. 1.

Each pilot valve in MSRIV is connected to a first control sub-column, and two pilot valves in each pilot valve series set are respectively connected to two different first control sub-columns. The first control sub-columns connected to the same set of pilot valves of each MSRIV are different. The pilot valves in the same set are the two pilot valves connected to a same first control sub-column in the two series set of pilot valves in MSRIV (for example, in Fig. 1: pilot valve EL1-A and pilot valve EL2-A in MSRIV-1, pilot valve EL1-B and pilot valve EL2-B in MSRIV-2, and pilot valve EL1-C and pilot valve EL2-C in MSRIV-3).

In the present embodiment, in each pilot valve series set, the two pilot valves in series are controlled by two different control columns (specifically controlled by the first control sub-column). Because each MSRIV must be connected to three different first control sub-columns, and two of the four pilot valves of each MSRIV must be controlled by the same first control sub-column. The first control sub-columns connected to the pilot valves of the same set of each MSRIV are different, and the first control sub-columns connected to the pilot valves of the same set of three MSRIVs are different. For instance, in Fig. 1, pilot valves EL1-A and EL2-A of MSRIV-1 share DCS A column D of the first control sub-column, pilot valves EL1-B and EL2-B of MSRIV-2 share DCS B column D of the first control sub-column, pilot valves EL1-C and EL2-C of MSRIV-3 share DCS C column D of the first control sub-column. The above-mentioned connection between the first control sub-column and the four pilot valves of MSRIV can effectively ensure that the corresponding control operation will be performed only when the same control signal sent by at least two first control sub-columns is received, thereby avoiding the situation where MSRIV is falsely activated or falsely closed due to any of the control columns being falsely triggered.

Further, the first control sub-column connected to the same set of pilot valves of each MSRIV is the pilot valve common control column corresponding to each MSRIV (for example, in Fig. 1, the pilot valve common control column corresponding to MSRIV-1 is the first control sub-column DCS A column D, the pilot valve common control column corresponding to MSRIV-2 is the first control sub-column DCS B column D, and the pilot valve common control column corresponding to MSRIV-3 is the first control sub-column DCS C column D). The common control column of the pilot valve connected to each MSRIV is in the same independent control column as the second control sub-column connected to the MSRIV in the same emission loop.

In the present embodiment, as shown in Fig. 1, the first control sub-column connected to the same set of pilot valves of MSRIV-1 is DCS A column D, and the second control sub-column connected to MSRCV-1 in series with MSRIV-1 is DCS A column C, the first control sub-column DCS A column D and the second control sub-column DCS A column C belong to the same control column, and the other conditions are similar and will not be repeated. The arrangement of them in the same independent control column helps to simplify the design of the safety-level functional control system.

Further, when the pilot valves of the same set in MSRIV receive the first control signal, and at least one of the other pilot valves of MSRIV also receives the first control signal, MSRIV executes control operation corresponding to the first control signa.

In the present embodiment, when executing a control operation on an MSRIV, the corresponding pilot valve common control column and at least one of the other two first control sub-columns are generally selected to send the first control signal, to control the MSRIV to perform a control operation corresponding to the first control signal. As shown in Fig. 1, for MSRIV-1, if the first control sub-column DCS A column D and the first control sub-column is DCS B column D send the first control signal at the same time; or, the first control sub-column DCS A column D and the first control sub column DCS C column D send the first control signal simultaneously; or, the first control sub column DCS A column D, the first control sub column DCS B column D, and the first control sub-column DCS C column D send the first control signal is sent simultaneously. At this time, MSRIV-1 will execute the corresponding control operation of the first control signal.

Specifically, referring to Fig. 2, the second control sub-column may include:
a first control module, configured to control the corresponding MSRCV to automatically adjust an opening degree of the MSRCV according to a pressure value of the steam generator by adopting PID algorithm when the MSRIV is turned on;
a second control module, configured to control the corresponding MSRCV to automatically adjust the opening degree of the MSRCV according to a manually set steam generator pressure value when the MSRIV is turned on, or, to control the corresponding MSRCV to automatically adjust the opening degree of the MSRCV according to a manually set opening degree;
a third control module, configured to control the corresponding MSRCV to automatically adjust the opening degree of the MSRCV according to the nuclear power plant core power via a polyline function algorithm when the MSRIV is closed and there is no isolation function of the steam atmospheric emission system;
a logic drive circuit connected to the first control module, the second control module and the third control module respectively, and configured to control any one of the first control module, the second control module and the third control module to put into use according to a preset control logic.

In the presetn embodiment, in the control process, PID algorithm is the most widely used automatic control algorithm that controls the deviation according to the proportion, integral and differentiation. PID algorithm has the advantages of simple principle, easy implementation, wide application, independent control parameters, and relatively simple parameter selection. The polyline function refers to a function formed by connecting a number of straight line segments.

In the present embodiment, for the above-mentioned safety functions SF01-SF06 of steam atmospheric emission system, each MSRCV is configured with three independent control modules in corresponding second control sub-column (the first control module M-1, the second control module M-2, and the third control module M-3 as shown in Fig. 2). Under any working conditions, there is only one control module in use, wherein, the first control module M-1 is used so that MSRCV can automatically adjust the opening agree according to the steam generator pressure value in SF01~SF03. The second control module M-2 is used to realize the manual adjustment function of the MSRCV in SF05. The third control module M-3 is used to realize automatical adjustment of the openging degree of MSRCV according to the core power of the nuclear power plant in SF06. In practical applications, M-1 can be implemented by an independent controller, and M-2 and M-3 can be implemented in a same controller.

Further, referring to Fig. 2, the logic drive circuit may include: a NOT gate, a first AND gate having an output end connected to the first control module, a second AND gate having an output end connected to the second control module, a third AND gate having an output end connected to the third control module,
a first logic control signal configured to call the first control module, connected to an input end of the first AND gate, and connected to an input end of the second AND gate and an input end of the third AND gate respectively through the NOT gate;
a second logic control signal (SF04) configured to close the second control sub-column, connected to the input end of the first AND gate, the input end of the second AND gate, and the input end of the third AND gate respectively through the NOT gate;
a third logic control signal configured to indicate that the corresponding MSRIV has been turned on, connected to the input end of the first AND gate and the input end of the second AND gate respectively, and connected to the input end of the third AND gate through the NOT gate.

Further, referring to Fig. 2, there may be a number of first logic control signals, such as SF01-SF03, all of which need to call the first control module. Therefore, the logic drive circuit can also include: an OR gate,
and a number of first logic control signals used to call the first control module are all connected to the input end of the OR gate, the output end of the OR gate is connected to the input end of the first AND gate, and the output end of the OR gate is connected to the input end of the second AND gate and the input end of the third AND gate through the NOT gate respectively.

In the present embodiment, the commissioning conditions of the three control modules of each MSRCV are the same. Fig. 2 shows the commissioning algorithm requirements of each control module.

When the SF01-SF03 function is put into use, if MSRIVi has been opened (i is 1, 2, 3), the M-1 control module of MSRCVi is put into use, and the M-1 control module adopts PID algorithm, so that MSRCV can automatically adjust its opening degree according to the pressure setting value of the steam generator;

When the SF01-SF04 function does not need to be put into use, if MSRIVi has been opened, the M-2 control module of MSRCVi will be put into use. The M-2 control module adopts PID algorithm, which can manually set a fixed value of steam generator pressure to make MSRCV open. The opening degree of MSRCV can be automatically adjusted according to the fixed value of the pressure of the steam generator, or the opening degree of the valve can be directly adjusted;

When the SF04 function does not need to be put into use (that is, there is no isolation function of the steam atmoshperic emission system), if MSRIVi is not turned on, the M-3 control module of MSRCVi is put into use, and the M-3 control module automatically adjusts the opening degree of MSRCV according to the core power of the nuclear power plant via polyline function algorithm, the opening degree of the valve is automatically adjusted to a standby opening degree according to the core power of the nuclear power plant;

When the SF04 function is put into use, all control modules (including the first control module, the second control module, and the third control module) are locked, and the MSRCVi is directly closed.

By designing the safety-level functional control system into three independent control columns connected to the steam atmospheric emission system, each independent control column includes: a first control sub-column for controlling MSRIV and a second control sub-column for controlling MSRCV Each MSRIV is connected to the first control sub-column of the three independent control sub-columns respectively, and is used to execute corresponding control operations when the same control signal sent by at least two first control sub-columns is received; each MSRCV is connected to the second control sub-column in an independent control column, and different MSRCVs are connected to different second control sub-columns, which are used to realize the safety function of the corresponding steam atmospheric emission system under the independent control of the corresponding second control sub-column. Compared with the existing control system, while meeting the triple redundant configuration of the steam atmospheric emission system, the safety-level functional control system of the present invention also meets the design principles of the three independent control columns, which simplifies the number of control columns of the control system, and reduces the complexity of the structure of the control system. The control function has a more centralized design, the failure of any independent control column will at most lead to the loss of an opening function of one emission loop in the steam atmospheric emission system, and an isolation function of the steam atmospheric emission system will remain unaffected and be highly reliable. When the safety function of only one independent control column in the safety-level function control system is triggered by mistake, and opening by mistake or wrong isolation function will not occur in any emission loop of the steam atmospheric emission system, and the safety level function control system has high reliability.

### Second embodiment

The embodiment of the present invention provides a safety-level functional control method for a steam atmospheric emission system of a nuclear power plant via a safety-level functional control system for a steam atmospheric emission system of a nuclear power plant of embodiment 1 of the present invention. The steam atmospheric emission system includes three independent emission loops, each emission loop is connected to a corresponding steam generator in a primary circuit of the nuclear power plant, and each emission loop includes MSRIV and MSRCV connected in series.

Referring to Fig. 3, the method includes:
Step S11: establishing three independent control columns connected to the steam atmospheric emission system, each independent control column including a first control sub-columnn for controlling MSRIV and a second sub-columnn for controlling MSRCV, each MSRIV being connected to three first control sub-columns of the three independent control columns respectively, each MSRCV being connected to a second control sub-column of one independent control column, and different MSRCVs being connected to different second control sub-columns.

In the present embodiment, compared to the existing control system, the safety-level functional control system for steam atmospheric emission system meets the requirements of triple redundant configuration of the steam atmospheric emission system as well as three independent control columns, which can further simplify the number of control columns of the control system, reduces the complexity of the control system, and makes the control function more centralized. Specifically, in the emission loop designed for the triple-redundant configuration of the steam atmospheric emission system, each emission loop includes MSRIV and MSRCV connected in series. On the one hand, each MSRIV is connected to first control sub-column o three independent control columns, to perform the corresponding control operation when the same control signal sent by at least two first control sub-columns is received, so that MSRIV will not cause false start or shut down by mistake due to any control column being falsely triggered, thereby avoiding the misoperation of any emission loop in the steam atmospheric emission system, and ensuring the reliability of the safety-level function control system. On the one hand, each MSRCV is connected to a second control sub-column of an independent control column, and different MSRCVs are connected to different second control sub-columns, to realize the corresponding safety functions of the steam atmospheric emission system under the independent control of the corresponding second control sub-columns. safety functions of the steam atmospheric emission system include: automatically adjusting MSRCV opening function according to a pressure value of a steam generator when MSRIV is turned on, and automatically adjusting MSRCV opening function, manual control function, isolation function of the steam atmospheric emission system according to a core power of the nuclear power plant when MSRIV is closed and there is no isolation function of the steam atmospheric emission system. MSRCV not only realizes the safety function of the steam atmospheric emission system, but also is designed in a safety-level function control system, which makes the design of the safety-level function control system for the steam atmospheric emission system more centralized and simplified.

Step S12: executing corresponding control operations through MSRIV when a first control signal sent by at least two first control sub-columns are received.

Step S13, executing corresponding safety function of the steam atmospheric emission system through the MSRCV when a second control signal independently sent by the second control sub-column is received. The safety function of the steam atmospheric emission system includes: automatically adjusting MSRCV opening function according to a pressure value of a steam generator when MSRIV is turned on, and automatically adjusting MSRCV opening function, manual control function, isolation function of the steam atmospheric emission system according to a core power of the nuclear power plant when MSRIV is closed and there is no isolation function of the steam atmospheric emission system.

It should be noted that, in actual applications, the safety functions of the steam atmospheric emission system mainly include the following functions:
1) overpressure protection function of the main steam generator (namely SF01):
   When MSRIV is turned on, MSRCV automatically adjusts its opening degree according to the pressure of the main steam generator, so that the pressure of the main steam generator is controlled within a certain range.
2) medium pressure rapid cooling function (namely SF02):
   When MSRIV is turned on, MSRCV automatically adjusts its opening degree according to the pressure of the main steam generator, so that the primary circuit can be rapidly cooled at a certain rate and maintained at a medium-pressure rapid cooling completion state.
3) the function of increasing the setting value (namely SF03):
   MSRIV is turned on; MSRCV is on standby, and MSRCV can automatically adjust its opening degree according to the pressure of the main steam generator.
4) isolation function of steam atmospheric emission system (namely SF04):
   MSRIV is closed; MSRCV is also closed (that is, the steam atmospheric emission system is isolated).
5) manual control function (namely SF05):
   MSRIV can be adjusted manually; MSRCV can also be adjusted manually.
6) Spare function of steam atmospheric emission system (SF06):
   MSRIV is closed and there is no steam atmospheric emission system isolation function. MSRCV automatically adjusts its opening degree according to the power of the nuclear power plant core.

From the above description of the safety function of the steam atmospheric emission system, it can be known that the functions of SF01-SF03 can be attributed to the automatic adjustment of MSRCV opening degree according to the pressure value of the steam generator of the nuclear power station; SF04 belongs to the isolation function of the s steam atmospheric emission system; SF05 is a manual control function; SF06 belongs to the function of automatically adjusting the opening degree of MSRCV according to the power of nuclear power plant core when MSRIV is closed and there is no steam atmospheric emission system isolation function.

Specifically, each MSRIV may include two sets of pilot valve series connected in parallel, each set of pilot valve series includes two pilot valves connected in series, and each pilot valve in MSRIV is connected to a first control sub-column. The two pilot valves in each pilot valve series set are respectively connected to two different first control sub-columns. The first control sub-columns connected to the same set of pilot valves of each MSRIV are different, and the same set of the pilot valves are the two pilot valves connected to the same first control sub-column in the two series of pilot valves in MSRIV

In the present embodiment, in each pilot valve series set, the two pilot valves in series are controlled by two different control columns (specifically controlled by the first control sub-column). Because each MSRIV must be connected to three different first control sub-columns, and two of the four pilot valves of each MSRIV must be controlled by the same first control sub-column. The first control sub-columns connected to the pilot valves of the same set of each MSRIV are different, and the first control sub-columns connected to the pilot valves of the same set of three MSRIVs are different. The above-mentioned connection between the first control sub-column and the four pilot valves of MSRIV can effectively ensure that the corresponding control operation will be performed only when the same control signal sent by at least two first control sub-columns is received, thereby avoiding the situation where MSRIV is falsely activated or falsely closed due to any of the control columns being falsely triggered.

Further, the first control sub-column connected to the same set of pilot valves of each MSRIV is a pilot valve common control column corresponding to each MSRIV, and the pilot valve common control column connected to each MSRIV and the second control sub-column connected to MSRIV in the same emission loop are in the same independent control column.

Further, step S12 can be implemented in the following manner:
When the pilot valves of the same set in MSRIV receive the first control signal, and at least one of the other pilot valves of MSRIV receives the first control signal at the same time, MSRIV executes the control operation corresponding to the first control signal.

In the present embodiment, when executing a control operation on an MSRIV, a corresponding pilot valve common control column and at least one of the other two first control sub-columns are generally selected to send the first signal, to control the MSRIV to execute a corresponding control operation.

Specifically, the second control sub-column may include:
a first control module, configured to control the corresponding MSRCV to automatically adjust an opening degree of the MSRCV according to a pressure value of the steam generator by adopting PID algorithm when the MSRIV is turned on;
a second control module, configured to control the corresponding MSRCV to automatically adjust the opening degree of the MSRCV according to a manually set steam generator pressure value when the MSRIV is turned on, or, to control the corresponding MSRCV to automatically adjust the opening degree of the MSRCV according to a manually set opening degree;
a third control module, configured to control the corresponding MSRCV to automatically adjust the opening degree of the MSRCV according to the nuclear power plant core power via a polyline function algorithm when the MSRIV is closed and there is no isolation function of the steam atmospheric emission system.
a logic drive circuit connected to the first control module, the second control module and the third control module respectively, and configured to control any one of the first control module, the second control module and the third control module to put into use according to a preset control logic.

In the present embodiment, for the aforementioned SF01-SF06 safety functions of the steam atmospheric emission system, each MSRCV is configured with three independent control modules in its corresponding second control sub-column. Under any working conditions, there is only one control module can be put into use, wherein the first control module M-1 is used to realize the automatic adjustment of MSRCV opening degree according to the pressure value of the steam generator in SF01~SF03 function; the second control module M-2 is used to realize the manual adjustment function of MSRCV in SF05; the third control module M-3 is used to realize the automatic adjustment of MSRCV opening degree in SF06 according to nuclear power plant core power. In actual applications, M-1 can be implemented by an independent controller, and M-2 and M-3 can be implemented in a same controller.

Further, the logic drive circuit may include: a NOT gate, a first AND gate having an output end connected to the first control module, a second AND gate having an output end connected to the second control module, a third AND gate having an output end connected to the third control module,
a first logic control signal configured to call the first control module, connected to an input end of the first AND gate, and connected to an input end of the second AND gate and an input end of the third AND gate respectively through the NOT gate;
a second logic control signal (SF04) configured to close the second control sub-column, connected to the input end of the first AND gate, the input end of the second AND gate, and the input end of the third AND gate respectively through the NOT gate;
a third logic control signal configured to indicate that the corresponding MSRIV has been turned on, connected to the input end of the first AND gate and the input end of the second AND gate respectively, and connected to the input end of the third AND gate through the NOT gate.

Further, there may be a number of first logic control signals, such as SF01-SF03, all of which need to call the first control module. Therefore, the logic drive circuit can also include OR gate,
a number of first logic control signals used to call the first control module are all connected to the input end of the OR gate, the output end of the OR gate is connected to the input end of the first AND gate, and the output end of the OR gate is connected to the input end of the second AND gate and the input end of the third AND gate through the NOT gate respectively.

In the present embodiment, the commissioning conditions of the three control modules of each MSRCV are the same, and the commissioning algorithm requirements for each control module are detailed as following.

When the SF01-SF03 functions are put into use, if MSRIVi has been opened (i is 1, 2, 3), the M-1 control module of MSRCVi is put into use, and the M-1 control module adopts PID algorithm and automatically adjusts the opening degree of MSRCV according to the set pressure value of the steam generator;

When the SF01-SF04 function does not need to be put into use, if MSRIVi has been opened, the M-2 control module ofMSRCVi will be put into use. The M-2 control module can manually set the fixed value of steam generator pressure to make MSRCV open via PID algorithm. The opening degree of the steam generator can be automatically adjusted according to the fixed value of the pressure of the steam generator, or the opening degree of the valve can be directly adjusted;

When the SF04 function does not need to be put into use, if MSRIVi is not opened, the M-3 control module of MSRCVi is put into use. The M-3 control module automatically adjusts the opening degree of MSRCV according to the core power of the nuclear power plant via polyline function algorithm. The opening degree of the valve is automatically adjusted to spare opening degree according to the core power of the nuclear power plant.

When the SF04 function is put into use (that is, there is no steam atmospheric emission system isolation function), all control modules (including the first control module, the second control module and the third control module) are all locked, and the MSRCVi is directly closed.

By designing the safety-level functional control system into three independent control columns connected to the steam atmospheric emission system, each independent control column includes: a first control sub-column for controlling MSRIV and a second control sub-column for controlling MSRCV Each MSRIV is connected to the first control sub-column of the three independent control sub-columns respectively, and is used to execute corresponding control operations when the same control signal sent by at least two first control sub-columns is received; each MSRCV is connected to the second control sub-column in an independent control column, and different MSRCVs are connected to different second control sub-columns, which are used to realize the safety function of the corresponding steam atmospheric emission system under the independent control of the corresponding second control sub-column. Compared with the existing control system, while meeting the triple redundant configuration of the steam atmospheric emission system, the safety-level functional control system of the present invention also meets the design principles of the three independent control columns, which simplifies the number of control columns of the control system, and reduces the complexity of the structure of the control system. The control function has a more centralized design, the failure of any independent control column will at most lead to the loss of an opening function of one emission loop in the steam atmospheric emission system, and an isolation function of the steam atmospheric emission system will remain unaffected and be highly reliable. When the safety function of only one independent control column in the safety-level function control system is triggered by mistake, and openging by mistake or wrong isolation function will not occur in any emission loop of the steam atmospheric emission system, and the safety level function control system has high reliability.

The sequence numbers in the above-mentioned embodiments of the present invention are only for description, and do not represent the advantages and disadvantages of the embodiments.

It is understandable to one ordinary skilled in the art that, all or part of the steps in the foregoing embodiments can be implemented by hardware, or by a program instructing relevant hardware. The program can be stored in a computer-readable storage medium. The storage medium can be a read-only memory, a magnetic disk or an optical disk, etc.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments, it should be appreciated that alternative embodiments without departing from the scope of the appended claims. Although specific terms are employed herein, they are used in a generic and descriptive sense only and not for purposes of limitation.

## Claims

1. A safety-level functional control system for a steam atmospheric emission system of a nuclear power plant, wherein the steam atmospheric emission system comprises three independent emission loops, each emission loop is connected to a corresponding steam generator in a primary circuit of the nuclear power plant, and each emission loop comprises a main steam relief isolation valve (MSRIV) and a main steam relief control valve (MSRCV) connected in series, **characterized in that**:
the safety-level function control system comprises three independent control columns being connected to the steam atmospheric emission system, each independent control column comprises a first control sub-column for controlling MSRIV and a second control sub-column for controlling MSRCV,
each MSRIV is respectively connected to the first control sub-column of the three independent control columns, such that it is configured to execute corresponding control operations when a first control signal sent by at least two first control sub-columns is received; and
each MSRCV is connected to a second control sub-column in one independent control column, and different MSRCVs are connected to different second control sub-columns, such that it is configured to execute safety function of the steam atmospheric emission system when a second control signal independently sent by a corresponding second control sub-column is received.

2. The system of claim 1, **characterized in that** each MSRIV comprises two sets of pilot valve series connected in parallel, and each set of pilot valve series comprises two pilot valves connected in series,
each pilot valve in MSRIV is connected to a first control sub-column, and the two pilot valves in each pilot valve series are connected to two different first control sub-column respectively,
the first control sub-columns connected to the same set of pilot valves of each MSRIV are different, and the same set of pilot valves are two pilot valves connected to the same first control sub-column in the two sets of pilot valve series in MSRIV

3. The system of claim 2, **characterized in that** the first control sub-column connected to the same set of pilot valves of each MSRIV is a pilot valve common control column corresponding to each MSRIV, and the pilot valve common control column connected to each MSRIV and the second control sub-column connected to MSRIV in the same emission loop are in a same independent control column.

4. The system of claim 3, **characterized in that** each MSRIV is configured such that when the same set of the pilot valves in MSRIV receives the first control signal, and at least one of the other pilot valves of MSRIV also receives the first control signal, MSRIV executes control operation corresponding to the first control signal.

5. The system of claim 1, **characterized in that** the safety function of the steam atmospheric emission system is configured for: automatically adjusting opening degree of MSRCV according to a pressure value of a steam generator when MSRIV is turned on; and automatically adjusting opening degree of MSRCV, manual control function, isolation function of the steam atmospheric emission system according to a core power of the nuclear power plant when MSRIV is closed and there is no isolation function of the steam atmospheric emission system.

6. The system of claim 5, **characterized in that** the second control sub-column comprises:
a first control module, configured to control the corresponding MSRCV to automatically adjust an opening degree of MSRCV according to a pressure value of the steam generator by adopting PID algorithm when the MSRIV is turned on;
a second control module, configured to control the corresponding MSRCV to automatically adjust the opening degree of MSRCV according to a manually set steam generator pressure value by adopting PID algorithm when the MSRIV is turned on, or, to control the corresponding MSRCV to automatically adjust the opening degree of MSRCV according to a manually set opening degree;
a third control module, configured to control the corresponding MSRCV to automatically adjust the opening degree of the MSRCV according to the core power of the nuclear power plant via a polyline function algorithm when the MSRIV is closed and there is no isolation function of the steam atmospheric emission system; and
a logic drive circuit connected to the first control module, the second control module and the third control module respectively, and configured to control any one of the first control module, the second control module and the third control module to put into use according to a preset control logic.

7. The system of claim 6, **characterized in that** the logic drive circuit comprises: a first AND gate having an output end connected to the first control module, a second AND gate having an output end connected to the second control module, a third AND gate having an output end connected to the third control module, and a NOT gate;
a first logic control signal configured to call the first control module, connected to an input end of the first AND gate, and connected to an input end of the second AND gate and an input end of the third AND gate respectively through the NOT gate;
a second logic control signal configured to close the second control sub-column, connected to the input end of the first AND gate, the input end of the second AND gate, and the input end of the third AND gate respectively through the NOT gate;
a third logic control signal configured to indicate that the corresponding MSRIV has been turned on, connected to the input end of the first AND gate and the input end of the second AND gate respectively, and connected to the input end of the third AND gate through the NOT gate.

8. The system of claim 7, **characterized in that** the logic drive circuit further comprises an OR gate, and a plurality of first logic control signals used to call the first control module are all connected to the input end of the OR gate, the output end of the OR gate is connected to the input end of the first AND gate, and the output end of the OR gate is connected to the input end of the second AND gate and the input end of the third AND gate through the NOT gate respectively.

9. A safety-level functional control method for a steam atmospheric emission system of a nuclear power plant, wherein the steam atmospheric emission system comprises three independent emission loops, each emission loop is connected to a corresponding steam generator in a primary circuit of the nuclear power plant, and each emission loop comprises a a main steam relief isolation valve (MSRIV) and a main steam relief control valve (MSRCV) connected in series, **characterized in that** the method comprises:
establishing three independent control columns connected to the steam atmospheric emission system, each independent control column comprising a first control sub-column for controlling MSRIV and a second sub-column for controlling MSRCV, each MSRIV being connected to first control sub-columns of the three independent control columns respectively, each MSRCV being connected to a second control sub-column of one independent control column, and different MSRCVs being connected to different second control sub-columns;
executing corresponding control operations through MSRIV when a first control signal sent by at least two first control sub-columns are received; and
executing corresponding safety function of the steam atmospheric emission system through the MSRCV when a second control signal independently sent by the second control sub-column is received.

10. The method of claim 9, **characterized in that** each MSRIV comprises two sets of pilot valve series connected in parallel, and each set of pilot valve series comprises two pilot valves connected in series,
each pilot valve in MSRIV is connected to a first control sub-column, and the two pilot valves in each pilot valve series are connected to two different first control sub-column respectively;
the first control sub-columns connected to the same set of pilot valves of each MSRIV are different, and the same set of pilot valves are two pilot valves connected to the same first control sub-column in the two sets of pilot valve series in MSRIV

11. The method of claim 10, **characterized in that** the first control sub-column connected to the same set of pilot valves of each MSRIV is a pilot valve common control column corresponding to each MSRIV, and the pilot valve common control column connected to each MSRIV and the second control sub-column connected to MSRIV in the same emission loop are in the same independent control column.

12. The method of claim 11, **characterized in that** executing corresponding control operations through MSRIV when a first control signal sent by at least two first control sub-columns are received comprises: MSRIV executing the control operation corresponding to the first control signal when the same set of pilot valves in MSRIV receive the first control signal, and at least one of the other pilot valves of MSRIV also receives the first control signal at the same time.

13. The method of claim 9, **characterized in that** the safety function of the steam atmospheric emission system comprises: automatically adjusting MSRCV opening degree according to a pressure value of a steam generator when MSRIV is turned on, and automatically adjusting MSRCV opening degree, manual control function, isolation function of the steam atmospheric emission system according to a core power of the nuclear power plant when MSRIV is closed and there is no isolation function of the steam atmospheric emission system.

14. The method of claim 13, **characterized in that** the second control sub-column comprises:
a first control module, configured to control the corresponding MSRCV to automatically adjust an opening degree of MSRCV according to a pressure value of the steam generator by adopting PID algorithm when the MSRIV is turned on;
a second control module, configured to control the corresponding MSRCV to automatically adjust the opening degree of MSRCV according to a manually set steam generator pressure value by adopting PID algorithm when the MSRIV is turned on, or, to control the corresponding MSRCV to automatically adjust the opening degree of the MSRCV according to a manually set opening degree;
a third control module, configured to control the corresponding MSRCV to automatically adjust the opening degree of the MSRCV according to the nuclear power plant core power via a polyline function algorithm when the MSRIV is closed and there is no isolation function of the steam atmospheric emission system; and
a logic drive circuit connected to the first control module, the second control module and the third control module respectively, and configured to control any one of the first control module, the second control module and the third control module to put into use according to a preset control logic.

15. The method of claim 14, **characterized in that** the logic drive circuit comprises: a first AND gate having an output end connected to the first control module, a second AND gate having an output end connected to the second control module, a third AND gate having an output end connected to the third control module, and a NOT gate;
a first logic control signal configured to call the first control module, connected to an input end of the first AND gate, and connected to an input end of the second AND gate and an input end of the third AND gate respectively through the NOT gate;
a second logic control signal configured to close the second control sub-column, connected to the input end of the first AND gate, the input end of the second AND gate, and the input end of the third AND gate respectively through the NOT gate; and
a third logic control signal configured to indicate that the corresponding MSRIV has been turned on, connected to the input end of the first AND gate and the input end of the second AND gate respectively, and connected to the input end of the third AND gate through the NOT gate.

16. The method of claim 15, **characterized in that** the logic drive circuit further comprises an OR gate, and a plurality of first logic control signals used to call the first control module are all connected to the input end of the OR gate, the output end of the OR gate is connected to the input end of the first AND gate, and the output end of the OR gate is connected to the input end of the second AND gate and the input end of the third AND gate respectively through the NOT gate.

## Patentansprüche

1. Funktionssteuerungssystem auf Sicherheitsebene für ein Atmosphärendampfemissionssystem eines Kernkraftwerks, wobei das Atmosphärendampfemissionssystem drei unabhängige Emissionsschleifen umfasst, wobei jede Emissionsschleife mit einem entsprechenden Dampferzeuger in einem Primärkreis des Kernkraftwerks verbunden ist und jede Emissionsschleife ein Hauptdampfentlastungsabsperrventil (MSRIV) und ein Hauptdampfentlastungssteuerventil (MSRCV), die in Reihe verbunden sind, umfasst, **dadurch gekennzeichnet, dass**:
das Funktionssteuerungssystem auf Sicherheitsebene drei unabhängige Steuersäulen umfasst, die mit dem Atmosphärendampfemissionssystem verbunden sind, wobei jede unabhängige Steuersäule eine erste Steueruntersäule zum Steuern des MSRIV und eine zweite Steueruntersäule zum Steuern des MSRCV umfasst,
jedes MSRIV jeweils mit der ersten Steueruntersäule der drei unabhängigen Steuersäulen verbunden ist, sodass es dazu konfiguriert ist, entsprechende Steueroperationen auszuführen, wenn ein erstes Steuersignal empfangen wird, das durch mindestens zwei erste Steueruntersäulen gesendet wird; und
jedes MSRCV mit einer zweiten Steueruntersäule in einer unabhängigen Steuersäule verbunden ist und verschiedene MSRCV mit unterschiedlichen zweiten Steueruntersäulen verbunden sind, sodass es dazu konfiguriert ist, eine Sicherheitsfunktion des Atmosphärendampfemissionssystems auszuführen, wenn ein zweites Steuersignal empfangen wird, das unabhängig durch eine entsprechende zweite Steueruntersäule gesendet wird.

2. System nach Anspruch 1, **dadurch gekennzeichnet, dass** jedes MSRIV zwei Sätze parallel verbundener Pilotventilreihen umfasst und jeder Satz Pilotventilreihen zwei in Reihe verbundene Pilotventile umfasst,
jedes Pilotventil in einem MSRIV mit einer ersten Steueruntersäule verbunden ist und die zwei Pilotventile in jeder Pilotventilreihe jeweils mit zwei unterschiedlichen ersten Steueruntersäulen verbunden sind,
die ersten Steueruntersäulen, die mit dem gleichen Satz von Pilotventilen jedes MSRIV verbunden sind, unterschiedlich sind und der gleiche Satz von Pilotventilen aus zwei Pilotventilen besteht, die mit der gleichen ersten Steueruntersäule in den zwei Sätzen von Pilotventilreihen in einem MSRIV verbunden sind.

3. System nach Anspruch 2, **dadurch gekennzeichnet, dass** die erste Steueruntersäule, die mit dem gleichen Satz von Pilotventilen jedes MSRIV verbunden ist, eine gemeinsame Pilotventil-Steuersäule ist, die jedem MSRIV entspricht, und die gemeinsame Pilotventil-Steuersäule, die mit jedem MSRIV verbunden ist, und die zweite Steueruntersäule, die mit einem MSRIV in der gleichen Emissionsschleife verbunden ist, sich in einer gleichen unabhängigen Steuersäule befinden.

4. System nach Anspruch 3, **dadurch gekennzeichnet, dass** jedes MSRIV so konfiguriert ist, dass, wenn der gleiche Satz von Pilotventilen in einem MSRIV das erste Steuersignal empfängt und mindestens eines der anderen Pilotventile des MSRIV auch das erste Steuersignal empfängt, das MSRIV eine Steueroperation ausführt, die dem ersten Steuersignal entspricht.

5. System nach Anspruch 1, **dadurch gekennzeichnet, dass** die Sicherheitsfunktion des Atmosphärendampfemissionssystems zu Folgendem konfiguriert ist: automatisches Anpassen eines Öffnungsgrads von MSRCV gemäß einem Druckwert eines Dampferzeugers, wenn MSRIV eingeschaltet ist; und automatisches Anpassen eines Öffnungsgrads von MSRCV, einer manuellen Steuerfunktion, Isolationsfunktion des Atmosphärendampfemissionssystems gemäß einer Kernleistung des Kernkraftwerks, wenn MSRIV geschlossen ist und keine Isolationsfunktion des Atmosphärendampfemissionssystems vorhanden ist.

6. System nach Anspruch 5, **dadurch gekennzeichnet, dass** die zweite Steueruntersäule Folgendes umfasst:
ein erstes Steuermodul, das dazu konfiguriert ist, das entsprechende MSRCV so zu steuern, dass es automatisch einen Öffnungsgrad von MSRCV gemäß einem Druckwert des Dampferzeugers anpasst, indem es einen PID-Algorithmus anwendet, wenn das MSRIV eingeschaltet ist;
ein zweites Steuermodul, das dazu konfiguriert ist, das entsprechende MSRCV so zu steuern, dass es den Öffnungsgrad von MSRCV automatisch gemäß einem manuell eingestellten Dampferzeugerdruckwert anpasst, indem es den PID-Algorithmus anwendet, wenn das MSRIV eingeschaltet ist, oder das entsprechende MSRCV so zu steuern, dass es automatisch den Öffnungsgrad von MSRCV gemäß einem manuell eingestellten Öffnungsgrad anpasst;
ein drittes Steuermodul, das dazu konfiguriert ist, das entsprechende MSRCV so zu steuern, dass es den Öffnungsgrad von MSRCV automatisch gemäß der Kernleistung des Kernkraftwerks über einen Polylinienfunktionsalgorithmus anpasst, wenn das MSRIV geschlossen ist und keine Isolationsfunktion des Atmosphärendampfemissionssystems vorhanden ist; und
eine logische Ansteuerschaltung, die mit dem ersten Steuermodul, dem zweiten Steuermodul beziehungsweise dem dritten Steuermodul verbunden und dazu konfiguriert ist, eines von dem ersten Steuermodul, dem zweiten Steuermodul und dem dritten Steuermodul zu steuern, um sie gemäß einer voreingestellten Steuerlogik zu verwenden.

7. System nach Anspruch 6, **dadurch gekennzeichnet, dass** die logische Ansteuerschaltung Folgendes umfasst: ein erstes UND-Gatter, das ein Ausgangsende aufweist, das mit dem ersten Steuermodul verbunden ist, ein zweites UND-Gatter, das ein Ausgangsende aufweist, das mit dem zweiten Steuermodul verbunden ist, ein drittes UND-Gatter, das ein Ausgangsende aufweist, das mit dem dritten Steuermodul verbunden ist, und ein NICHT-Gatter;
ein erstes logisches Steuersignal, das zum Aufrufen des ersten Steuermoduls konfiguriert ist, mit einem Eingangsende des ersten UND-Gatters verbunden ist und mit einem Eingangsende des zweiten UND-Gatters beziehungsweise einem Eingangsende des dritten UND-Gatters über das NICHT-Gatter verbunden ist;
ein zweites logisches Steuersignal, das zum Schließen der zweiten Steueruntersäule konfiguriert ist und mit dem Eingangsende des ersten UND-Gatters, dem Eingangsende des zweiten UND-Gatters beziehungsweise dem Eingangsende des dritten UND-Gatters über das NICHT-Gatter verbunden ist;
ein drittes logisches Steuersignal, das zum Angeben, dass das entsprechende MSRIV eingeschaltet wurde, konfiguriert ist, mit dem Eingangsende des ersten UND-Gatters beziehungsweise dem Eingangsende des zweiten UND-Gatters verbunden ist und mit dem Eingangsende des dritten UND-Gatters über das NICHT-Gatter verbunden ist.

8. System nach Anspruch 7, **dadurch gekennzeichnet, dass** die logische Ansteuerschaltung ferner ein ODER-Gatter umfasst und eine Vielzahl erster logischer Steuersignale, die zum Aufrufen des ersten Steuermoduls verwendet werden, alle mit dem Eingangsende des ODER-Gatters verbunden sind, das Ausgangsende des ODER-Gatters mit dem Eingangsende des ersten UND-Gatters verbunden ist und das Ausgangsende des ODER-Gatters mit dem Eingangsende des zweiten UND-Gatters beziehungsweise dem Eingangsende des dritten UND-Gatters über das NICHT-Gatter verbunden ist.

9. Funktionssteuerungsverfahren auf Sicherheitsebene für ein Atmosphärendampfemissionssystem eines Kernkraftwerks, wobei das Atmosphärendampfemissionssystem drei unabhängige Emissionsschleifen umfasst, wobei jede Emissionsschleife mit einem entsprechenden Dampferzeuger in einem Primärkreis des Kernkraftwerks verbunden ist und jede Emissionsschleife ein Hauptdampfentlastungsabsperrventil (MSRIV) und ein Hauptdampfentlastungssteuerventil (MSRCV), die in Reihe verbunden sind, umfasst, **dadurch gekennzeichnet, dass** das Verfahren Folgendes umfasst:
Einrichten von drei unabhängigen Steuersäulen, die mit dem Atmosphärendampfemissionssystem verbunden sind, wobei jede unabhängige Steuersäule eine erste Steueruntersäule zum Steuern von MSRIV und eine zweite Untersäule zum Steuern von MSRCV umfasst, wobei jedes MSRIV jeweils mit ersten Steueruntersäulen der drei unabhängigen Steuersäulen verbunden ist, wobei jedes MSRCV mit einer zweiten Steueruntersäule einer unabhängigen Steuersäule verbunden ist und unterschiedliche MSRCV mit unterschiedlichen zweiten Steueruntersäulen verbunden sind;
Ausführen entsprechender Steueroperationen durch MSRIV, wenn ein erstes Steuersignal empfangen wird, das durch mindestens zwei erste Steueruntersäulen gesendet wird; und
Ausführen einer entsprechenden Sicherheitsfunktion des Atmosphärendampfemissionssystems durch das MSRCV, wenn ein zweites Steuersignal empfangen wird, das unabhängig durch die zweite Steueruntersäule gesendet wird.

10. Verfahren nach Anspruch 9, **dadurch gekennzeichnet, dass** jedes MSRIV zwei Sätze parallel verbundener Pilotventilreihen umfasst und jeder Satz Pilotventilreihen zwei in Reihe verbundene Pilotventile umfasst,
jedes Pilotventil in einem MSRIV mit einer ersten Steueruntersäule verbunden ist und die zwei Pilotventile in jeder Pilotventilreihe jeweils mit zwei unterschiedlichen ersten Steueruntersäulen verbunden sind;
die ersten Steueruntersäulen, die mit dem gleichen Satz von Pilotventilen jedes MSRIV verbunden sind, unterschiedlich sind und der gleiche Satz von Pilotventilen aus zwei Pilotventilen besteht, die mit der gleichen ersten Steueruntersäule in den zwei Sätzen von Pilotventilreihen in einem MSRIV verbunden sind.

11. Verfahren nach Anspruch 10, **dadurch gekennzeichnet, dass** die erste Steueruntersäule, die mit dem gleichen Satz von Pilotventilen jedes MSRIV verbunden ist, eine gemeinsame Pilotventil-Steuersäule ist, die jedem MSRIV entspricht, und die gemeinsame Pilotventil-Steuersäule, die mit jedem MSRIV verbunden ist, und die zweite Steueruntersäule, die mit einem MSRIV in der gleichen Emissionsschleife verbunden ist, sich in der gleichen unabhängigen Steuersäule befinden.

12. Verfahren nach Anspruch 11, **dadurch gekennzeichnet, dass** das Ausführen entsprechender Steueroperationen durch MSRIV, wenn ein erstes Steuersignal empfangen wird, das durch mindestens zwei ersten Steueruntersäulen gesendet wird, Folgendes umfasst: Ausführen durch MSRIV der Steueroperation, die dem ersten Steuersignal entspricht, wenn der gleiche Satz von Pilotventilen in MSRIV das erste Steuersignal empfängt und mindestens eines der anderen Pilotventile von MSRIV gleichzeitig auch das erste Steuersignal empfängt.

13. Verfahren nach Anspruch 9, **dadurch gekennzeichnet, dass** die Sicherheitsfunktion des Atmosphärendampfemissionssystems Folgendes umfasst: automatisches Anpassen eines Öffnungsgrads von MSRCV gemäß einem Druckwert eines Dampferzeugers, wenn MSRIV eingeschaltet ist, und automatisches Anpassen eines Öffnungsgrads von MSRCV, einer manuellen Steuerfunktion, Isolationsfunktion des Atmosphärendampfemissionssystems gemäß einer Kernleistung des Kernkraftwerks, wenn MSRIV geschlossen ist und keine Isolationsfunktion des Atmosphärendampfemissionssystems vorhanden ist.

14. Verfahren nach Anspruch 13, **dadurch gekennzeichnet, dass** die zweite Steueruntersäule Folgendes umfasst:
ein erstes Steuermodul, das dazu konfiguriert ist, das entsprechende MSRCV so zu steuern, dass es automatisch einen Öffnungsgrad von MSRCV gemäß einem Druckwert des Dampferzeugers anpasst, indem es einen PID-Algorithmus anwendet, wenn das MSRIV eingeschaltet ist;
ein zweites Steuermodul, das dazu konfiguriert ist, das entsprechende MSRCV so zu steuern, dass es den Öffnungsgrad von MSRCV automatisch gemäß einem manuell eingestellten Dampferzeugerdruckwert anpasst, indem es den PID-Algorithmus anwendet, wenn das MSRIV eingeschaltet ist, oder das entsprechende MSRCV so zu steuern, dass es automatisch den Öffnungsgrad des MSRCV gemäß einem manuell eingestellten Öffnungsgrad anpasst;
ein drittes Steuermodul, das dazu konfiguriert ist, das entsprechende MSRCV so zu steuern, dass es den Öffnungsgrad von MSRCV automatisch gemäß der Kernleistung des Kernkraftwerks über einen Polylinienfunktionsalgorithmus anpasst, wenn das MSRIV geschlossen ist und keine Isolationsfunktion des Atmosphärendampfemissionssystems vorhanden ist; und
eine logische Ansteuerschaltung, die mit dem ersten Steuermodul, dem zweiten Steuermodul beziehungsweise dem dritten Steuermodul verbunden und dazu konfiguriert ist, eines von dem ersten Steuermodul, dem zweiten Steuermodul und dem dritten Steuermodul zu steuern, um sie gemäß einer voreingestellten Steuerlogik zu verwenden.

15. Verfahren nach Anspruch 14, **dadurch gekennzeichnet, dass** die logische Ansteuerschaltung Folgendes umfasst: ein erstes UND-Gatter, das ein Ausgangsende aufweist, das mit dem ersten Steuermodul verbunden ist, ein zweites UND-Gatter, das ein Ausgangsende aufweist, das mit dem zweiten Steuermodul verbunden ist, ein drittes UND-Gatter, das ein Ausgangsende aufweist, das mit dem dritten Steuermodul verbunden ist, und ein NICHT-Gatter;
ein erstes logisches Steuersignal, das zum Aufrufen des ersten Steuermoduls konfiguriert ist, mit einem Eingangsende des ersten UND-Gatters verbunden ist und mit einem Eingangsende des zweiten UND-Gatters beziehungsweise einem Eingangsende des dritten UND-Gatters über das NICHT-Gatter verbunden ist;
ein zweites logisches Steuersignal, das zum Schließen der zweiten Steueruntersäule konfiguriert ist, mit dem Eingangsende des ersten UND-Gatters, dem Eingangsende des zweiten UND-Gatters beziehungsweise dem Eingangsende des dritten UND-Gatters über das NICHT-Gatter verbunden ist; und
ein drittes logisches Steuersignal, das zum Angeben, dass das entsprechende MSRIV eingeschaltet wurde, konfiguriert ist, mit dem Eingangsende des ersten UND-Gatters beziehungsweise dem Eingangsende des zweiten UND-Gatters verbunden ist und mit dem Eingangsende des dritten UND-Gatters über das NICHT-Gatter verbunden ist.

16. Verfahren nach Anspruch 15, **dadurch gekennzeichnet, dass** die logische Ansteuerschaltung ferner ein ODER-Gatter umfasst und eine Vielzahl erster logischer Steuersignale, die zum Aufrufen des ersten Steuermoduls verwendet werden, alle mit dem Eingangsende des ODER-Gatters verbunden sind, das Ausgangsende des ODER-Gatters mit dem Eingangsende des ersten UND-Gatters verbunden ist und das Ausgangsende des ODER-Gatters mit dem Eingangsende des zweiten UND-Gatters beziehungsweise dem Eingangsende des dritten UND-Gatters über das NICHT-Gatter verbunden ist.

## Revendications

1. Système de commande de fonction de niveau de sécurité pour un système d'émission de vapeur dans l'atmosphère d'une centrale nucléaire, ledit système d'émission de vapeur dans l'atmosphère comprenant trois boucles d'émission indépendantes, chaque boucle d'émission étant reliée à un générateur de vapeur correspondant dans un circuit primaire de la centrale nucléaire, et chaque boucle d'émission comprenant une vanne d'isolement de décharge de vapeur principale (MSRIV) et une vanne de commande de décharge de vapeur principale (MSRCV) reliées en série, **caractérisé en ce que** : le système de commande de fonction de niveau de sécurité comprend trois colonnes de commande indépendantes reliées au système d'émission de vapeur dans l'atmosphère, chaque colonne de commande indépendante comprend une première sous-colonne de commande pour commander la MSRIV et une seconde sous-colonne de commande pour commander la MSRCV,
chaque MSRIV est respectivement reliée à la première sous-colonne de commande des trois colonnes de commande indépendantes, de sorte qu'elle soit configurée pour exécuter des opérations de commande correspondantes lorsqu'un premier signal de commande envoyé par au moins deux premières sous-colonnes de commande est reçu ; et
chaque MSRCV est reliée à une seconde sous-colonne de commande dans une colonne de commande indépendante, et différentes MSRCV sont reliées à différentes secondes sous-colonnes de commande, de sorte qu'elle soit configurée pour exécuter une fonction de sécurité du système d'émission de vapeur dans l'atmosphère lorsqu'un second signal de commande envoyé indépendamment par une seconde sous-colonne de commande correspondante est reçu.

2. Système de la revendication 1, **caractérisé en ce que** chaque MSRIV comprend deux ensembles de séries de vannes pilotes raccordées en parallèle, et chaque ensemble de séries de vannes pilotes comprenant deux vannes pilotes reliées en série,
chaque vanne pilote dans la MSRIV est reliée à une première sous-colonne de commande, et les deux vannes pilotes dans chaque série de vannes pilotes sont reliées respectivement à deux premières sous-colonnes de commande différentes,
les premières sous-colonnes de commande reliées au même ensemble de vannes pilotes de chaque MSRIV sont différentes, et le même ensemble de vannes pilotes étant deux vannes pilotes reliées à la même première sous-colonne de commande dans les deux ensembles de séries de vannes pilotes dans la MSRIV.

3. Système de la revendication 2, **caractérisé en ce que** la première sous-colonne de commande reliée au même ensemble de vannes pilotes de chaque MSRIV est une colonne de commande commune de vanne pilote correspondant à chaque MSRIV, et la colonne de commande commune de vanne pilote reliée à chaque MSRIV et les secondes sous-colonnes de commande reliées à MSRIV dans la même boucle d'émission sont dans une même colonne de commande indépendante.

4. Système de la revendication 3, **caractérisé en ce que** chaque MSRIV est configurée de sorte que lorsque le même ensemble de vannes pilotes dans la MSRIV reçoit le premier signal de commande, et qu'au moins une des autres vannes pilotes de MSRIV reçoit également le premier signal de commande, la MSRIV exécute une opération de commande correspondant au premier signal de commande.

5. Système de la revendication 1, **caractérisé en ce que** la fonction de sécurité du système d'émission de vapeur dans l'atmosphère est configurée pour : régler automatiquement le degré d'ouverture de la MSRCV selon une valeur de pression d'un générateur de vapeur lorsque la MSRIV est activée ; et régler automatiquement le degré d'ouverture de la MSRCV, la fonction de commande manuelle, la fonction d'isolement du système d'émission de vapeur dans l'atmosphère selon une puissance du coeur de la centrale nucléaire lorsque la MSRIV est fermée et qu'aucune fonction d'isolement du système d'émission de vapeur dans l'atmosphère n'existe.

6. Système de la revendication 5, **caractérisé en ce que** la seconde sous-colonne de commande comprend :
un premier module de commande, configuré pour commander la MSRCV correspondant afin de régler automatiquement un degré d'ouverture de la MSRCV selon une valeur de pression du générateur de vapeur en adoptant un algorithme PID lorsque la MSRIV est activée ;
un deuxième module de commande, configuré pour commander la MSRCV correspondant afin de régler automatiquement le degré d'ouverture de la MSRCV en fonction d'une valeur de pression du générateur de vapeur définie manuellement en adoptant un algorithme PID lorsque la MSRIV est activée, ou, pour commander la MSRCV correspondant afin de régler automatiquement le degré d'ouverture de la MSRCV selon un degré d'ouverture défini manuellement ;
un troisième module de commande, configuré pour commander la MSRCV correspondant afin de régler automatiquement le degré d'ouverture de la MSRCV selon la puissance du coeur de la centrale nucléaire par l'intermédiaire d'un algorithme de fonction polyligne lorsque la MSRIV est fermée et qu'aucune fonction d'isolement du système d'émission de vapeur dans l'atmosphère n'existe ; et
un circuit de pilotage en logique relié respectivement au premier module de commande, au deuxième module de commande et au troisième module de commande, et configuré pour commander l'un quelconque du premier module de commande, du deuxième module de commande et du troisième module de commande pour une mise en service selon une logique de commande prédéfinie.

7. Système de la revendication 6, **caractérisé en ce que** le circuit de pilotage en logique comprend : une première porte ET comportant une extrémité de sortie reliée au premier module de commande, une deuxième porte ET comportant une extrémité de sortie reliée au deuxième module de commande, une troisième porte ET comportant une extrémité de sortie reliée au troisième module de commande, et une porte NON ;
un premier signal de commande logique configuré pour appeler le premier module de commande, relié à une extrémité d'entrée de la première porte ET, et relié à une extrémité d'entrée de la deuxième porte ET et à une extrémité d'entrée de la troisième porte ET respectivement par l'intermédiaire de la porte NON ;
un deuxième signal de commande logique configuré pour fermer la seconde sous-colonne de commande, reliée à l'extrémité d'entrée de la première porte ET, à l'extrémité d'entrée de la deuxième porte ET et à l'extrémité d'entrée de la troisième porte ET respectivement par l'intermédiaire de la porte NON ;
un troisième signal de commande logique configuré pour indiquer que la MSRIV correspondante a été activée, reliée à l'extrémité d'entrée de la première porte ET et à l'extrémité d'entrée de la deuxième porte ET respectivement, et reliée à l'extrémité d'entrée de la troisième porte ET par l'intermédiaire de la porte NON.

8. Système de la revendication 7, **caractérisé en ce que** le circuit de pilotage en logique comprend en outre une porte OU,
et une pluralité de premiers signaux de commande logique utilisés pour appeler le premier module de commande étant tous reliés à l'extrémité d'entrée de la porte OU, l'extrémité de sortie de la porte OU est reliée à l'extrémité d'entrée de la première porte ET, et l'extrémité de sortie de la porte OU est reliée à l'extrémité d'entrée de la deuxième porte ET et à l'extrémité d'entrée de la troisième porte ET par l'intermédiaire de la porte NON respectivement.

9. Procédé de commande de fonction de niveau de sécurité pour un système d'émission de vapeur dans l'atmosphère d'une centrale nucléaire, ledit système d'émission de vapeur dans l'atmosphère comprenant trois boucles d'émission indépendantes, chaque boucle d'émission étant reliée à un générateur de vapeur correspondant dans un circuit primaire de la centrale nucléaire, et chaque boucle d'émission comprenant une vanne d'isolement de décharge de vapeur principale (MSRIV) et une vanne de commande de décharge de vapeur principale (MSRCV) reliées en série, **caractérisé en ce que** le procédé comprend :
l'établissement de trois colonnes de commande indépendantes reliées au système d'émission de vapeur dans l'atmosphère, chaque colonne de commande indépendante comprenant une première sous-colonne de commande destinée à la commande de MSRIV et une seconde sous-colonne de commande destinée à la commande de MSRCV, chaque MSRIV étant reliée à des premières sous-colonnes de commande des trois colonnes de commande indépendantes respectivement, chaque MSRCV étant reliée à une seconde sous-colonne de commande d'une colonne de commande indépendante, et différentes MSRCV étant reliées à des secondes sous-colonnes de commande différentes ;
l'exécution des opérations de commande correspondantes par l'intermédiaire de MSRIV lorsqu'un premier signal de commande envoyé par au moins deux premières sous-colonnes de commande est reçu ; et
l'exécution d'une fonction de sécurité correspondante du système d'émission de vapeur dans l'atmosphère par l'intermédiaire de la MSRCV lorsqu'un second signal de commande envoyé indépendamment par la seconde sous-colonne de commande est reçu.

10. Procédé de la revendication 9, **caractérisé en ce que** chaque MSRIV comprend deux ensembles de séries de vannes pilotes reliées en parallèle, et chaque ensemble de séries de vannes pilotes comprend deux vannes pilotes reliées en série,
chaque vanne pilote dans la MSRIV étant reliée à une première sous-colonne de commande, et les deux vannes pilotes dans chaque série de vannes pilotes étant reliées respectivement à deux premières sous-colonnes de commande différentes ;
les premières sous-colonnes de commande reliées au même ensemble de vannes pilotes de chaque MSRIV sont différentes, et le même ensemble de vannes pilotes étant deux vannes pilotes reliées à la même première sous-colonne de commande dans les deux ensembles de séries de vannes pilotes dans la MSRIV.

11. Procédé de la revendication 10, **caractérisé en ce que** la première sous-colonne de commande reliée au même ensemble de vannes pilotes de chaque MSRIV est une colonne de commande commune de vanne pilote correspondant à chaque MSRIV, et la colonne de commande commune de vanne pilote reliée à chaque MSRIV et les secondes sous-colonnes de commande reliées à la MSRIV dans la même boucle d'émission sont dans la même colonne de commande indépendante.

12. Procédé de la revendication 11, **caractérisé en ce que** l'exécution d'opérations de commande correspondantes par l'intermédiaire de MSRIV lorsqu'un premier signal de commande envoyé par au moins deux premières sous-colonnes de commande est reçu comprend : MSRIV exécutant l'opération de commande correspondant au premier signal de commande lorsque le même ensemble de vannes pilotes dans la MSRIV reçoit le premier signal de commande, et au moins l'une des autres vannes pilotes de MSRIV reçoit également le premier signal de commande en même temps.

13. Procédé de la revendication 9, **caractérisé en ce que** la fonction de sécurité du système d'émission de vapeur dans l'atmosphère comprend : le réglage automatique du degré d'ouverture de la MSRCV selon une valeur de pression d'un générateur de vapeur lorsque la MSRIV est activée, et le réglage automatique du degré d'ouverture de la MSRCV, d'une fonction de commande manuelle, d'une fonction d'isolement du système d'émission de vapeur dans l'atmosphère selon une puissance de coeur de la centrale nucléaire lorsque la MSRIV est fermée et qu'aucune fonction d'isolement du système d'émission de vapeur dans l'atmosphère n'existe.

14. Procédé de la revendication 13, **caractérisé en ce que** la seconde sous-colonne de commande comprend :
un premier module de commande, configuré pour commander la MSRCV correspondant afin de régler automatiquement un degré d'ouverture de la MSRCV selon une valeur de pression du générateur de vapeur en adoptant un algorithme PID lorsque la MSRIV est activée ;
un deuxième module de commande, configuré pour commander la MSRCV correspondant afin de régler automatiquement le degré d'ouverture de la MSRCV selon une valeur de pression du générateur de vapeur définie manuellement en adoptant un algorithme PID lorsque la MSRIV est activée, ou, pour commander la MSRCV correspondante afin de régler automatiquement le degré d'ouverture de la MSRCV selon un degré d'ouverture réglé manuellement ; un troisième module de commande, configuré pour commander la MSRCV correspondante afin de régler automatiquement le degré d'ouverture de la MSRCV selon la puissance du coeur de la centrale nucléaire par l'intermédiaire d'un algorithme de fonction polyligne lorsque la MSRIV est fermée et qu'aucune fonction d'isolement du système d'émission de vapeur dans l'atmosphère n'existe ; et
un circuit de pilotage en logique relié respectivement au premier module de commande, au deuxième module de commande et au troisième module de commande, et configuré pour commander l'un quelconque du premier module de commande, du deuxième module de commande et du troisième module de commande pour une mise en service selon une logique de commande prédéfinie.

15. Procédé de la revendication 14, **caractérisé en ce que** le circuit de pilotage en logique comprend : une première porte ET comportant une extrémité de sortie reliée au premier module de commande, une deuxième porte ET comportant une extrémité de sortie reliée au deuxième module de commande, une troisième porte ET comportant une extrémité de sortie reliée au troisième module de commande, et une porte NON ;
un premier signal de commande logique configuré pour appeler le premier module de commande, relié à une extrémité d'entrée de la première porte ET, et relié à une extrémité d'entrée de la deuxième porte ET et à une extrémité d'entrée de la troisième porte ET respectivement par l'intermédiaire de la porte NON ;
un deuxième signal de commande logique configuré pour fermer la seconde sous-colonne de commande, relié à l'extrémité d'entrée de la première porte ET, à l'extrémité d'entrée de la deuxième porte ET et à l'extrémité d'entrée de la troisième porte ET respectivement par l'intermédiaire de la porte NON ; et
un troisième signal de commande logique configuré pour indiquer que la MSRIV correspondante a été activée, reliée à l'extrémité d'entrée de la première porte ET et à l'extrémité d'entrée de la deuxième porte ET respectivement, et reliée à l'extrémité d'entrée de la troisième porte ET par l'intermédiaire de la porte NON.

16. Procédé de la revendication 15, **caractérisé en ce que** le circuit de pilotage en logique comprend en outre une porte OU, et une pluralité de premiers signaux de commande logique utilisés pour appeler le premier module de commande sont tous reliés à l'extrémité d'entrée de la porte OU, l'extrémité de sortie de la porte OU est reliée à l'extrémité d'entrée de la première porte ET, et l'extrémité de sortie de la porte OU est reliée à l'extrémité d'entrée de la deuxième porte ET et à l'extrémité d'entrée de la troisième porte ET respectivement par l'intermédiaire de la porte NON.
